# EUROPÄISCHE PATENTANMELDUNG

(11) **EP 4 023 813 A1**
(43) Veröffentlichungstag der Anmeldung: **06.07.2022**
(21) Anmeldenummer: 20217522.0
(22) Anmeldetag: 29.12.2020
(51) Int. Cl.: D21C 3/20, D21C 9/08

(54) **VERFAHREN ZUR HERSTELLUNG VON PRODUKTEN AUF BASIS VON HOLZ ALS ROHSTOFF**

(71) Anmelder: Technische Universität Wien, 1040 Wien (AT)
(72) Erfinder: FRIEDL, Anton, 1130 Wien (AT); LEHR, Maximilian, 2074 Kleinhöflein (AT); MILTNER, Martin, 3034 Maria Anzbach (AT)
(74) Vertreter: SONN Patentanwälte OG

(57) **Zusammenfassung**

Beschrieben wird ein Verfahren zur Herstellung von Produkten auf Basis von nicht verholzender Biomasse als Rohstoff, dadurch gekennzeichnet, dass Cellulose, Hemicellulosen und Lignin enthaltende, nicht verholzende Biomasse in Form von Partikeln einer Extraktionsbehandlung mit einem Extraktionsmittel unterzogen wird, das ein oder mehrere organische Lösungsmittel oder ein organischwässriges Gemisch des oder der Lösungsmittel mit Wasser umfasst, wobei der Gehalt an Fettsäuren in den Partikeln durch die Extraktionsbehandlung der Partikel mit dem Lösungsmittel um mindestens 70 % verringert wird, gemessen als Hexanal-Gehalt in Gew.-% nach beschleunigter Alterung für 72 h bei 90°C, jedoch der Gehalt an Cellulose, Hemicellulosen und Lignin bei dieser Extraktionsbehandlung im Wesentlichen erhalten wird.

## Beschreibung

Die Erfindung betrifft Verfahren zur Herstellung von Produkten auf Basis nicht verholzender Biomasse, insbesondere Verfahren zur Vorbehandlung von nicht verholzender Biomasse.

Nicht verholzende Biomasse als Rohstoff für die industrielle Verarbeitung zu Produkten (wie z.B. Faserplatten oder Karton) enthält - neben den Hauptkomponenten Cellulose, Hemicellulosen und Lignin - viele verschiedene nieder- und hochmolekulare Stoffe wie Fettsäuren, Phenole, Alkohole, Aldehyde, Pinene, Terpenoide und Terpene. Diese Substanzen werden als sog. Extraktstoffe (oder Extractives) zusammengefasst, da sie mit heißem Wasser und/oder organischen Lösungsmitteln aus nicht verholzender Biomasse extrahiert werden können (Boutekedjiret et al., in: Alternative Solvents for Natural Products Extraction (2014), Chemat et al. (Eds), 205-219; Martins et al., J. Mol. Liq. 241 (2017), 996-1002; Hippenstiel et al., Arch. Geflügelk. 75 (2011), 226-234; Hatanaka, Food Rev. 12 (1996), 303-350). Viele dieser Extraktstoffe sind "organoleptisch relevante Substanzen", da sie zu geruchlichen und geschmacklichen Wechselwirkungen und Beeinträchtigungen bei Produkten auf Basis von nicht verholzender Biomasse mit der für die jeweilige Endanwendung relevanten Umgebung führen können (beispielsweise Lebensmittel im Falle von Verpackungskarton oder Raumluft im Falle von Faserplatten). Neben Extraktstoffen, die als flüchtige Kohlenwasserstoffe von Natur aus charakteristische Gerüche aufweisen (z.B. Terpene), sind dafür vor allem Aldehyde (ganz besonders Hexanal) verantwortlich, die durch eine autokatalytische Oxidation von den in der nicht verholzenden Biomasse natürlich vorkommenden Fettsäuren, insbesondere Linolsäure, gebildet werden (Hatanaka, 1996).

Weiters können - bedingt durch diese Extraktionsstoffe - Partikel aus nicht verholzender Biomasse bei der Verarbeitung zu klebrigen Teilchen koagulieren können, was durch die ebenfalls in der nicht verholzende Biomasse natürlich vorkommenden Fette und Wachse verstärkt wird. Diese Aggregate können auch Störeffekte auf der Oberfläche der hergestellten Produkte (wie Karton oder Spezialpapieren) führen, die in weiterer Folge Probleme bei der Weiterverarbeitung der Produkte (z.B. Bedrucken) mit sich bringen können. Auch können sich diese Stoffe störend auf den Produktionsprozess auswirken, indem sie Ablagerung auf Maschinenteilen, Walzen und Bespannungsteilen udgl. verursachen.

Derzeit werden Fettsäuren aus Partikeln für Partikel-basierte Produkte, wie beispielsweise Karton oder Faserplatten, nicht entfernt. Stattdessen wird die Autooxidation dieser Fettsäuren gehemmt bzw. verzögert, indem die als Katalysator wirkenden Schwermetallionen in den Produkten, die aus Partikeln von nicht verholzender Biomasse hergestellt werden, durch die Zugabe von Komplexbildnern wie z.B. Ethylendiamintetraessigsäure (EDTA) oder Diethylentriaminpentaessigsäure (DTPA) gebunden werden. EDTA und seine Metallkomplexe sind in der Abwasserreinigung jedoch nur schlecht und langsam abbaubar und gelten daher heute als ökologisch bedenklich, was insbesondere für Abwasser aus Produktionsanlagen für Produkte auf Basis von nicht verholzender Biomasse immer größere Probleme mit sich bringt.

Bei weiteren Verfahren, die zur Verbesserung der organoleptischen Eigenschaften beschrieben wurden, können bleichende, delignifizierende, oxidierende oder reduzierende Chemikalien eingesetzt werden.

Es ist daher Aufgabe der vorliegenden Erfindung, den Gehalt an freisetzbaren geruchs- und geschmacksaktiven Aldehyden in Produkten auf Basis von nicht verholzender Biomasse, wie Karton oder Faserplatten durch Autooxidation von in der nicht verholzenden Biomasse natürlich vorkommenden Fettsäuren zu verringern. Dies soll ohne den Einsatz oder Zusatz von Komplexbildnern erfolgen.

Eine weitere Aufgabe der vorliegenden Erfindung ist eine signifikante Verbesserung der organoleptischen Eigenschaften der Partikel auf Basis von nicht verholzender Biomasse, sowie gealterter Partikel, die nach diesem Verfahren hergestellt werden, so dass die damit produzierten Produkte keine oder nur geringe Geruchsbelastungen auch ohne den Einsatz oder Zusatz von bleichenden, delignifizierenden, oxidierenden oder reduzierenden Chemikalien aufweisen. Insbesondere soll mit dem erfindungsgemäßen Verfahren nach Alterung der Partikel aus nicht verholzender Biomasse (bis zu 6 Monate) ein im Zuge dieser Alterung auftretender unerwünschter Geruch und Geschmackveränderungen in den damit in Berührung kommenden Lebensmittel verhindert werden.

Schließlich besteht eine bevorzugte Aufgabe der vorliegenden Erfindung darin, weitere Inhaltsstoffe aus Partikeln auf Basis von nicht verholzender Biomasse zu entfernen, die im geplanten Produkt unerwünscht sind, beispielsweise Terpene.

Demgemäß betrifft die vorliegende Erfindung ein Verfahren zur Herstellung von Produkten auf Basis von nicht verholzender Biomasse als Rohstoff, bei welchem Cellulose, Hemicellulosen und Lignin enthaltende, nicht verholzende Biomasse in Form von Partikeln einer Extraktionsbehandlung mit einem Extraktionsmittel unterzogen wird, das ein oder mehrere organische Lösungsmittel oder ein organisch-wässriges Gemisch des oder der Lösungsmittel mit Wasser umfasst, wobei der Gehalt an Fettsäuren in den Partikeln durch die Extraktionsbehandlung der Partikel mit dem Extraktionsmittel um mindestens 70 % verringert wird, gemessen als Hexanal-Gehalt in Gew.-% nach beschleunigter Alterung für 72 h bei 90°C, jedoch der Gehalt an Cellulose, Hemicellulosen und Lignin bei dieser Extraktionsbehandlung im Wesentlichen erhalten wird.

Wie sich im Zuge der vorliegenden Erfindung gezeigt hat, kann mit der erfindungsgemäßen Extraktion der organoleptisch bedenklichen Stoffe aus den Rohstoffen eine signifikante Verbesserung der organoleptischen Eigenschaften der Partikel auf Basis von nicht verholzender Biomasse ohne Zugabe von Komplexbildern, sondern durch Entfernung potentieller Aldehydquellen, allen voran Fettsäuren, erzielt werden. Allerdings ist bekannt, dass Fettsäuren als Aldehydquelle, und in weiterer Folge Quelle organoleptischer Beeinträchtigungen dieser Partikel, messtechnisch nur mit großem Aufwand zufriedenstellend zu quantifizieren sind. Erfindungsgemäß wurde daher für die Beurteilung des Extraktionserfolges der Hexanal-Gehalt der Partikel nach Alterung herangezogen. Dies hat sich als verlässlicher Parameter für die organoleptischen Eigenschaften der aus dem Rohmaterial herzustellenden Produkte, wie (Spezial-)Papier, Karton, Faserplatten, etc., erwiesen, der ausgezeichnet mit den (sehr zeitaufwendigen) traditionellen Alterungsversuchen korreliert (s. hierzu die Untersuchungen und Nachweise im Beispielteil, unten).

Es zeigte sich, dass mit dem erfindungsgemäßen Verfahren ein Großteil der Fettsäuren und anderer störender Stoffe (Pinene, Terpenoide und Terpene, etc.) extrahiert werden können, ohne dass dadurch die Substanz an nicht verholzender Biomasse (Cellulose, Hemicellulosen und Lignin) signifikant beeinträchtigt wird. Obgleich jegliche Verbesserung bei der Entfernung von Fettsäuren aus dem Rohmaterial auf Basis von nicht verholzender Biomasse Vorteile bringt, so ist eine maßgebliche Verringerung von zumindest 70 % für eine im Großmaßstab geeignete wirtschaftliche Verwendung mit dem vorliegenden Verfahren ohne Weiteres möglich. Vorzugsweise wird die erfindungsgemäße Behandlung aber so gewählt, dass damit die erwünschte Reduktion jedenfalls erzielt wird, und so eine Reduktion um zumindest 70 %, vorzugsweise um zumindest 90%, insbesondere um zumindest 95 %, erzielt wird. Entsprechend können die erfindungsgemäß anzuwendenden Bedingungen dann z.B. anhand der Natur der nicht verholzenden Biomasse oder des Extraktionsmittels so gewählt werden, dass sich die erfindungsgemäße Hexanal-Verringerung jedenfalls ergibt. Damit lassen sich auch bevorzugt Höchstwerte in Absolut-Gehalten an Hexanal einstellen. Obgleich auch Partikel mit einem Hexanal-Gehalt von 2 mg/kg Trockenmaterial (TM) für bestimmte Anwendungen verwendet werden können, sind Absolutwerte von unter 1 mg/kgTM bevorzugt. Bei den besonders strengen Richtlinien, die im Zuge der Beispiele der vorliegenden Erfindung angewendet worden sind, wurde ein Hexanal-Gehalt von 0,5 mg/kgTM Hexanal (bezogen auf trockene nicht verholzende Biomasse) als empirisch ermittelter Wert markiert, unter dem organoleptische Beeinträchtigungen erfahrungsgemäß sensorisch nicht mehr wahrnehmbar sind. Demgemäß betrifft eine bevorzugte Ausführungsform des erfindungsgemäßen Verfahrens eine Extraktion der Partikel auf Basis von nicht verholzender Biomasse auf einen Hexanal-Gehalt von 0,5 mg/kgTM oder darunter. Für Hexanal-Gehalte der Partikel > 0,5 mg/kgTM konnte festgestellt werden, dass hier mit zunehmendem Hexanal-Gehalt auch das Risiko einer organoleptischen Beeinträchtigung der Partikel anstieg.

Für die Zwecke der vorliegenden Erfindung kann die Bestimmung des Hexanal-Gehaltes im Zweifel über eine Headspace-Gaschromatografie (HS-GC) erfolgen, indem ca. 0,2 g lufttrockene nicht verholzende Biomasse-Partikel (90-95 wt% (= Gew.-%) Trockensubstanzgehalt (TSG)) in ein Headspace-Vial gefüllt werden. In diesen Vials müssen die nicht verholzende Biomasse-Partikel dann verschlossen bei Raumtemperatur (ca. 20 °C) sechs Monate gealtert werden, um die Fettsäuren zu Hexanal zu oxidieren. Da dies sehr viel Zeit in Anspruch nimmt, und damit keine zeitnahe Beurteilung des Extraktionserfolges zulässt, erfolgt die Bestimmung des Hexanal-Gehaltes gemäß der vorliegenden Erfindung über die beschleunigte Alterung in Anlehnung an die DIN ISO 5630-2. Damit wurde der Hexanal-Gehalt in den Experimenten im Beispielteil (sofern nicht explizit anders angegeben) durchgeführt; dieses Verfahren ist auch im Zweifel für die Ermittlung des Hexanal-Gehaltes für die Zwecke der vorliegenden Erfindung maßgeblich. Dabei werden die nicht verholzende Biomasse-Partikel in HS-GC-Vials verschlossen, 72 h bei 90 °C gealtert und im Anschluss der Hexanal-Gehalt mittels HS-GC ermittelt.

Vorzugsweise liegen die Partikel in einer Größe von kleiner als 5 cm, bevorzugt in Form von Fasern, Spänen, Strands, Hackschnitzel oder Mischungen davon, vor. Dieses Partikelmerkmal (als "Partikelgröße") kann vorzugsweise durch eine Siebanalyse mittels Quadratmaschensieb ermittelt werden. Das Partikelmerkmal der Partikelgröße wird demnach an der Maschenweite formuliert, eben vorzugsweise 5 cm (andere Größen (je nach praktischer Notwendigkeit), z.B. 4, 3, 2 oder 1 cm (oder eventuell auch höher) können damit ebenfalls leicht eingestellt werden). Die Partikel gemäß dieser Größendefinition entsprechen gemäß dieser bevorzugten Ausführungsform im Wesentlichen somit dem Unterkorn des Siebes mit Maschenweite als Partikelmerkmal.

Die erfindungsgemäß verwendeten Partikel auf Basis von nicht verholzender Biomasse liegen bevorzugt in Form von Fasern, Spänen, Strands, Hackschnitzel oder Mischungen davon vor.

Gemäß einer bevorzugten Ausführungsform sind die Partikel durch mechanischen und/oder thermischen und/oder chemischen Aufschluss aufgefaserte nicht verholzende Biomasse, insbesondere nicht verholzende Biomassefasern mit mittleren Faserlängen zwischen 0,5 und 2 mm und mittleren Faserdurchmessern zwischen 10 und 50 µm. Mittlere Faserlänge sowie mittlerer Faserdurchmesser beziehen sich dabei auf das Längen-Mittel, bestimmt mittels optischer Messung der suspendierten Fasern. Diese optische Messung führt in der Regel zu einheitlichen Resultaten (unabhängig von gewählter Methodik und Analysegerät), als besonders geeignet haben sich aber die Geräte PulpEye (http://www.pulpeye.com/products/pulpeye/) und insbesondere MorFi Fiber Analyzer (http://www.tech-pap.com/fiber-and-shive-analyzer-morfi-neo,lab-device,31.html), erwiesen.

Die Menge an organischen Verbindungen, die sich mit dem erfindungsgemäßen Verfahren extrahieren lässt, ist je nach Art der nicht verholzenden Biomasse und Bestandteil der Pflanzen, aus denen die Partikel gewonnen werden, unterschiedlich. So variieren derartige organische Verbindungen in Rinde oft im Bereich von 20 bis 40 %, im Olivenbaum-Strauchschnitt oft von 15 und 20 im Weinreben-Strauchschnitt oft von 5 bis 10 %; für Rutenhirse wurden z.B. Anteile von 16 % bzw. 10 %, für Schwingelgras von 25 % bzw. 16 %, von Maisstroh von 17 % bzw. 5 % und von Rotahorn-Rinde von 21 bzw. 13 % berichtet (Royer et al., J. Food Res. 1 (2012), 8-45; Routa et al., Nat. Res. Bioecon. Stud. 73 (2017), Nat. Res. Inst. (FI); Cavalaglio et al., Sustainability 12 (2020), 6678; Thammasouk et al., J. Agric. Food Chem. 45 (1997), 437-443). Demgemäß kann sich der Extraktstoffgehalt je nach Art und Spezies der nicht-verholzenden Biomasse zwischen einem einstelligen ProzentBereich bis zu mehreren 10% bewegen, also in der Regel von 1 bis 50 %, meist von 5 bis 40 % (auch diese Angaben beziehen sich auf Gew.-%) .

Erfindungsgemäß können sämtliche nicht verholzenden Biomassen, die Cellulose, Hemicellulosen und Lignin enthalten, und mit einem Gehalt an zu entfernenden organoleptischen Substanzen eingesetzt werden. Bevorzugt sind erfindungsgemäß aber natürlich Biomasse-Partikel aus "Energiepflanzen" bzw. schnellwachsenden ein- und mehrjährigen, nicht verholzenden C4- bzw. C3-Pflanzen, wobei C4-Pflanzen dabei im Vergleich zu den in Mitteleuropa heimischen C3-Pflanzen durch ein höheres Massenwachstum gekennzeichnet sind und daher eine effizientere CO₂-Nutzung und daraus resultierend en höherer photosynthetischer Wirkungsgrad aufweisen. Bevorzugte Partikel gemäß der vorliegenden Erfindung sind dabei Stroh und strohähnliche Stoffe. In der Landwirtschaft wird "Stroh" als "trockene Halme, Stängel und Blätter der ausgedroschenen Getreidearten, Hülsenfrüchte, Öl- und Faserpflanzen definiert und u.a. auch als Brennstoff vermarktet. Unter "strohähnlichen Stoffen" werden Gräserarten, Ganzpflanzengetreide, Miscanthus, Topinambur, etc. verstanden, d.h. der gesamte oberirdische Biomasseaufwuchs von nicht verholzenden Pflanzen. Unter "strohähnlichen pflanzlichen Stoffen" werden auch Energiepflanzen wie z. B. Schilf, Strauchschnitt, Blätter von Bäumen und Sträuchern, Rinde, Elefantengras, Heu, und Maisspindeln" verstanden.

In der DE 10 2009 046 127 A1 wird ein Verfahren zur Herstellung von Holzfaserwerkstoffen beschrieben, bei welchem flüchtigeorganische Verbindungen ("VOC"), aliphatische und aromatische Aldehyde, insbesondere Hexanal und Furfural, reduziert werden, wobei Holz mit mindestens einer Verbindung zur Einstellung eines neutralen bis basischen pH-Wertes (wie NaOH) und mindestens einem Komplexbildner (wie EDTA oder DTPA) behandelt wird. Dabei wird hervorgehoben, dass für eine derartige Herstellung keine bleichenden, delignifizierenden, oxidierenden oder reduzierenden Chemikalien eingesetzt werden und kein Abpressen flüssiger Formulierung vor der Plastifizierung des Holzes bzw. der Holzhackschnitzel erfolgt. Jedoch bringt der Einsatz von Komplexbildnern wie EDTA und DTPA, wie oben erwähnt, ein gravierendes Abwasser- und Umweltproblem mit sich. Die vorliegende Erfindung bringt somit entscheidende Vorteile auch gegenüber einem bloßen, an sich bekannten chemischthermisch-mechanischen Aufschluss (CTMP), wobei Hackschnitzel mit Natriumsulfit und EDTA vermischt werden, und zwar sowohl hinsichtlich der Umweltaspekte als auch hinsichtlich der erfindungsgemäßen Wirkung in der effizienten Abreicherung von Fettsäuren aus dem Rohmaterial.

Die US 5,698,667 A offenbart eine Vorbehandlung eines ligninhaltigen zellulosehaltigen Materials durch Extraktion mit einem organischen Lösungsmittel (z.B. Aceton), um Holzextraktstoffe, wie flüchtige organische Verbindungen (VOC) und höhermolekulare Pitch-Komponenten zu entfernen, ohne die Integrität der Lignozellulosebestandteile des Materials wesentlich zu beeinträchtigen. Dabei konnten aber keine industriell verwertbaren Abreicherungen hinsichtlich der unerwünschten Inhaltsstoffe erzielt werden (die maximale Abreicherung von Pitch und VOCs betrug 54,4 und 65 % (nach zweimaliger Extraktion für Aceton in Wasser (80/20) und 100 % Aceton), obgleich die dort verwendete Methodologie nicht sicherstellen kann, dass flüchtige Komponenten beim Entfernen des Lösungsmittels aus dem Extrakt in die Gasphase übergehen und somit die Abreicherungen bei Bestimmung durch den Eindampfrückstand des Extraktes noch niedriger anzusetzen sind.

Demgegenüber wird im erfindungsgemäßen Verfahren mithilfe einer extraktiven Vorbehandlung von Partikeln aus nicht verholzender Biomasse mit organischen Lösungsmitteln oder organisch-wässrigen Gemischen des oder der Lösungsmittel mit Wasser wird ein Großteil der in der Biomasse natürlich vorkommenden Fettsäuren bereits vor einer Weiterverarbeitung (beispielsweise zu Karton oder Faserplatten) entfernt. Darüber hinaus werden durch diese Vorbehandlung weitere Extraktstoffe, wie beispielsweise Aldehyde, Pinene, Phenole und Terpene in der nicht verholzenden Biomasse stark reduziert. Der Hexanal-Gehalt hat sich erfindungsgemäß als Indikator für die Autooxidation der in der nicht verholzenden Biomasse natürlich vorkommender Fettsäuren bewährt, vor allem wenn er dabei nach beschleunigter Alterung der Partikel (72 h bei 90 °C) ermittelt wird. Dieser Hexanal-Gehalt wird erfindungsgemäß um mindestens 70 % bezogen auf das Potential des Ausgangsrohstoffs (sowie - in Absolut-Gehalten) vorzugsweise auf bis zu unter 0,5 mg/kgTM reduziert. Dadurch können mit der vorliegenden Erfindung geruchliche und geschmackliche Wechselwirkungen von Produkten auf Basis von nicht verholzender Biomassemit der für die jeweilige Endanwendung relevanten Umgebung (beispielsweise Lebensmittel im Falle von Verpackungskarton oder Raumluft im Falle von Faserplatten) stark reduziert werden. Gleichzeitig werden durch die Vorbehandlung die Partikel in ihrer Zusammensetzung nicht wesentlich verändert, das heißt Cellulose, Hemicellulosen und Lignin in der nicht verholzenden Biomasse werden nicht in nennenswertem Umfang (jedenfalls nicht um mehr als 10%, vorzugsweise um nicht mehr als 6 %, insbesondere um nicht mehr als 4 % verringert) extrahiert und/oder abgebaut, wobei diese Verringerung vorzugsweise als extrahierte Feststoffmasse, bezogen auf den Ausgangsstoff, die Biomasse-Partikel, ermittelt wird. Neben der Verringerung des Anteiles organoleptisch relevanter Komponenten in den Partikeln ergeben sich mit der vorliegenden Erfindung insbesondere für die Papier-, Faserplatten- und Kartonherstellung noch weitere wichtige Produkt- und Prozessvorteile:

Unlösliche klebrige Rückstände auf Basis der in der nicht verholzenden enthaltenen organischen Verbindungen werden aus dem Prozess entfernt (bzw. wird deren Entstehung im Produktionsprozess verhindert) und können sich damit nicht störend auf den Produktionsprozess auswirken, so dass es zu keiner oder verringerter Ablagerung auf Maschinenteilen, Walzen und Bespannungsteilen udgl. kommt.

Dadurch können mit der vorliegenden Erfindung auch Störeffekte auf der Papier-/Karton/Faserplattenoberfläche verringert werden, wodurch in weiterer Folge auch Probleme bei der Weiterverarbeitung des Papiers/Karton/Faserplatte (z.B. Bedrucken) deutlich reduziert werden. Durch den deutlich geringeren Anteil dieser Komponenten auf der Oberfläche und auch im Inneren des Papiers/Kartons/Faserplatte ergibt sich weiters eine gesteigerte Produktqualität wie überraschenderweise eine Erhöhung der mechanischen Festigkeit.

Durch die genannten verbesserten Produkteigenschaften von Produkten, die aus den erfindungsgemäß extrahierten Partikel hergestellt werden, können auch neue Anwendungsgebiete erschlossen werden, die man heute nur mit Papier/Karton/Faserplatte abdecken kann, dessen Faserkomponenten Zellstoff und/oder behandeltem BCTMP (bleached chemi-thermo-mechanical pulp) entstammen (beispielsweise hochwertige Verpackungskartons) oder für besonders heikle Anwendungen, die heute ausschließlich mit Zellstoff bedient werden können.

Außerdem werden durch die extraktive Vorbehandlung gemäß der vorliegenden Erfindung auch die CSB-Frachten des Abwassers des Prozesses stark reduziert, wodurch größere Produktionskapazitäten bei gleichbleibender CSB-Fracht im Abwasser ermöglicht werden.

Die Freisetzung von geruchs- und geschmacksaktiven Aldehyden in Produkten auf Basis von nicht verholzender Biomasse, wie Karton oder Faserplatten durch Autooxidation von in der nicht verholzenden Biomasse natürlich vorkommenden Fettsäuren kann gemäß der vorliegenden Erfindung auch völlig ohne den Zusatz von Komplexbildnern erreicht werden. Die Zugabe eines Komplexbildners wie EDTA oder DTPA bei der Herstellung der Produkte auf Basis von nicht verholzender Biomasse zur Verringerung der Geruchs- und Geschmacksbelastung dieser Produkte wird somit überflüssig, wodurch die EDTA-/DTPA-Belastung des Abwassers eliminiert wird, und somit die (grund)wasserbezogenen Umweltauswirkungen der Produktion dieser Produkte gesenkt werden, als auch die EDTA-/DTPA-Belastung der Produkte selbst vermieden wird. Des Weiteren werden neben Fettsäuren auch andere Extraktstoffe signifikant reduziert und dadurch aus dem Prozess ausgeschleust, was die Extraktstoff-Belastung des Prozesswassers in der Herstellung der Partikel senkt und somit niedrigere Ansprüche an die Abwasser-Reinigung/-Aufbereitung zur Folge hat. Die reduzierte Extraktstoffbelastung des Prozesswassers hat auch den Vorteil, dass Probleme beim Herstellungsprozess der aus den erfindungsgemäß behandelten Partikel hergestellten Produkte verringert und die Qualität der Produkte erhöht werden kann. Diese Variante ist daher eine besonders umweltfreundliche Ausführungsform der vorliegenden Erfindung.

Die in der Praxis für eine bestimmte nicht verholzende Biomasseart bzw. für bestimmte nicht verholzende Biomassematerialien für eine Extraktion von zumindest 70 % der Fettsäuren bzw. zur Etablierung eines maximalen Absolut-Wertes an Hexanal von unter 2 mg/kg Trockenmasse, vorzugsweise von unter 1 mg/kg Trockenmasse, insbesondere von unter 0,5 mg/kg Trockenmasse, (jeweils gemessen als Hexanal-Gehalt in Gew.-% der extrahierten Partikel nach beschleunigter Alterung für 72 h bei 90°C), erforderlichen konkreten Verfahrensbedingungen (wie Größe, Form und Trockensubstanzgehalt der Partikel, Wahl des Extraktionsmittels, Wasser-Gehalt, Temperatur, Behandlungsdauer, pH, Extraktionsmittelmenge (im Verhältnis zur eingesetzten nicht verholzenden Biomasse), Druck, Anzahl der Extraktionsstufen, Varianten der Kontaktierung zwischen Extraktionsmittel und Feststoff, Betriebsweise etc.) können anhand der hierin offenbarten Lehre, insbesondere unter Berücksichtigung der im Beispielteil dargelegten Ergebnisse, unmittelbar und ohne weiteres erfinderisches Zutun festgelegt werden, insbesondere in Anbetracht der (idR bekannten) Mengen an organischen Stoffen (wie Fettsäuren, Pinene, Phenole, Terpene, etc.) der nicht verholzenden Biomasse, der Natur der nicht verholzenden Biomasse und den Erfordernissen für das finale Produkt (Karton, Papier, Faserplatte, Anwendung in bestimmten Bereichen (Lebensmittel, Arzneimittel, Futtermittel, etc.).

Insbesondere kann die vorliegende Erfindung relativ leicht in bestehende Produktionsanlagen integriert bzw. mit bestehenden Anlagen betrieben werden.

Ein oder mehrere der oben gestellten Aufgaben können erfindungsgemäß durch ein Verfahren mit den Merkmalen des Patentanspruchs 1 gelöst werden. Vorteilhafte Ausgestaltungen mit zweckmäßigen Weiterbildungen der Erfindung sind in den jeweiligen Unteransprüchen angegeben.

Die Wahl der flüssigen Phase des erfindungsgemäßen Extraktes (hier als Extraktionsmittel bezeichnet) ist auch abhängig von der relevanten nicht verholzenden Biomasseart (und deren natürlichen Gehalt an Extraktstoffen). Jedoch muss das Lösungsmittel oder Lösungsmittel-Gemisch im Extraktionsmittel auch so gewählt werden, dass es zu keinem signifikanten Verlust von Cellulose, Hemicellulosen und Lignin kommt und die Behandlungsdauer trotzdem nicht übergebührlich lang ist. Als besonders vorteilhaft haben sich dabei erfindungsgemäß Gemische aus Ethanol, Aceton und Wasser mit 0 - 95 Gew.-% Ethanol, vorzugsweise 50 - 90 Gew.-% Ethanol, und 0 - 99 Gew.-% Aceton, vorzugsweise 30 - 90 Gew.-% Aceton, als organisch-wässrige Lösungsmittel im Extraktionsmittel herausgestellt. Weitere organische Lösungsmittel die anstelle von (oder für bestimmte Zwecke gegebenenfalls auch zusammen mit) Ethanol oder Aceton im Hinblick auf einen industriellen Maßstab im Extraktionsmittel verwendet werden können sind beispielsweise Methanol, n-Propanol und Iso-Propanol.

Bevorzugte Verhältnisse von Extraktionsmittel zu Feststoff-Trockensubstanz betragen beim erfindungsgemäßen Verfahren 5:1 - 25:1 (w/w), vorzugsweise 8:1 - 17:1 (w/w).

Bei den hierin angegebenen Verhältnissen und Konzentrationen im Extraktionsmittel gelten die folgenden Erwägungen: Mit 100 % Extraktionsmittel ist immer die Gesamtmenge an Extraktionsmittel, das nach der Extraktion vorliegt, gemeint, nämlich das Extraktionsmittel, einschließlich des aus den Partikel extrahierten Materialien und dem im nicht verholzenden Biomasse-Ausgangsstoff (in den Partikel) enthaltenen Wasser. Da aber die Mengen an nicht verholzendem Biomasse-Ausgangsstoff in der Regel hierin als " nicht verholzende Biomasse-Trockenmasse" angegeben werden und die aus der nicht verholzenden Biomasse extrahierten Substanzen in der Regel unter 1 % der Gesamtmasse des Extraktionsmittels betragen, entsprechen die Verhältnisse vor der Extraktion im Wesentlichen (eben +/- 1 %) auch den Verhältnissen nach der Extraktion (der gegebenenfalls vorhandene Wasseranteil im nicht verholzende Biomasse-Ausgangsmaterial, der bei der wirtschaftlichen Verwertung meist gegeben ist, wird demgemäß hierin immer bereits dem Extraktionsmittel zugerechnet). Daraus ergibt sich bei der Verwendung von 100 Gew.-% Aceton-Konzentration des Extraktionsmittels bei 1:10 (Feststoff:Extraktionsmittel) somit 1 kg nicht verholzende Biomasse-Trockenmasse und 10 kg Aceton. 70 Gew.-% Aceton-Konzentration des Extraktionsmittels bei 1:10 (Feststoff:Extraktionsmittel) wären dann z.B. 1 kg nicht verholzende Biomasse-Trockenmasse, 7 kg Aceton und 3 kg Wasser. Das extrahierte Material würde zwar, wie erwähnt, noch hinzukommen, bewegt sich aber erfahrungsgemäß bei Konzentrationen weit unter 1 Gew.-% im Extraktionsmittel und ist somit vernachlässigbar.

Die Extraktionstemperaturen können ebenfalls anhand der übrigen nicht verholzende Biomasse- und Prozessparametern festgelegt werden, insbesondere auch unter Berücksichtigung des Energieaufwandes, den höhere Temperaturen erfordern. Erfindungsgemäß bevorzugt erfolgt die Behandlung bei einer Extraktions-Temperatur von 20 - 150 °C, vorzugsweise 40 - 120 °C, insbesondere 50 - 110 °C.

Gemäß einer bevorzugten Ausführungsform wird das erfindungsgemäße Verfahren bei Normaldruck betrieben; in bestimmten Fällen kann eine Extraktion unter Druck vorteilhaft sein (trotz des energetischen Mehraufwandes der Druckanwendung). Daher erfolgt die erfindungsgemäße Behandlung gemäß einer bevorzugten Ausführungsform bei einem absoluten Extraktionsdruck von 1 - 5 bar, vorzugsweise 1 - 1,49 bar.

Auch bei der Dauer des erfindungsgemäßen Extraktionsverfahrens kann man anhand der übrigen Prozessparameter festlegen, welche Dauer für die zu erzielende Abreicherung an Fettsäuren erforderlich ist. Bevorzugter Weise erfolgt die erfindungsgemäße Behandlung während einer Extraktionszeit von 10 min - 8 h, vorzugsweise 30 min - 7 h, insbesondere 1 - 5 h.

Das vorliegende Verfahren ist prinzipiell für alle nicht verholzende Biomasse-basierten Produkte geeignet, bei denen organoleptische Eigenschaften eine Rolle spielen. Besonders geeignet ist das erfindungsgemäße Verfahren für Produkte, die längere Zeit in Verwendung sind, für die Verpackung von Lebensmitteln oder in Innenräumen verwendet werden. Daher eignet sich das erfindungsgemäße Verfahren besonders zur (großtechnischen) Herstellung von Karton, Papier, insbesondere Spezialpapier, Faserplatten, Spanplatten, Dämmstoffe, Gebrauchsgegenständen (beispielsweise (bzw. im Zweifel) gemäß Definition des Österreichischen Lebensmittelsicherheits- und Verbraucherschutzgesetzes (LMSV, BGBl. I Nr. 13/2006, idFv 01.10.2020)), Medizinprodukten (beispielsweise (bzw. im Zweifel) gemäß Definition des Österreichischen Medizinproduktegesetzes (MPG, BGBl. Nr. 657/1996, idFv 01.10.2020)), Lebensmittelzusatzstoffe, pharmazeutische Zusatzstoffe, wie z.B. Arzneiträgerstoffe. Besonders bevorzugt wird die vorliegende Erfindung zur Herstellung von Karton eingesetzt.

Besonders vorteilhafte Verfahrensparameter für die Extraktionsbehandlung gemäß der vorliegenden Erfindung sind ausgewählt aus:
- Behandlung mit Ethanol in einer Konzentration von zumindest 65 Gew.-% bei zumindest 65°C für einen Zeitraum von zumindest 3 h;
- Behandlung mit Ethanol in einer Konzentration von zumindest 65 Gew.-% bei zumindest 85°C für einen Zeitraum von zumindest 30 min;
- Behandlung mit Ethanol in einer Konzentration von zumindest 70 Gew.-% bei zumindest 105°C für einen Zeitraum von zumindest 30 min; oder
- Behandlung mit Ethanol in einer Konzentration von zumindest 45 Gew.-% bei zumindest 105°C für einen Zeitraum von zumindest 5 h.
- Behandlung mit Aceton in einer Konzentration von zumindest 50 Gew.-% bei zumindest 40 °C für einen Zeitraum von zumindest 30 min.

Im Rahmen der vorliegenden Erfindung hat sich herausgestellt, dass sowohl Batch als auch kontinuierliche und semi-kontinuierliche Extraktionen möglich sind, und sich sogar vorteilhaft auf das Extraktionsergebnis auswirken können, insbesondere wenn die Teilverweilzeit pro Extraktionsschritt maximal 1h beträgt.

Wesentlich an der Festlegung der Verfahrensparameter ist auch, dass Bedingungen gewählt werden, bei welchen es zu keinen wesentlichen Verlusten der Substanz an nicht verholzender Biomasse (also beim Gehalt an Cellulose, Hemicellulosen und Lignin) kommt. Daher kann man auch vorsehen, dass bei der erfindungsgemäßen Behandlung der Gehalt an Trockensubstanz der eingesetzten Partikel um weniger als 10 %, vorzugsweise um weniger als 5 %, insbesondere um weniger als 4 %, verringert wird, wobei diese Verringerung vorzugsweise als extrahierte Feststoffmasse, bezogen auf den Ausgangsstoff, nämlich die Partikel auf Basis von nicht verholzender Biomasse, ermittelt wird.

Wie bereits oben erwähnt, variieren verschiedene nicht verholzende Pflanzen in ihren Gehalten an VOCs. Dementsprechend sind auch die konkreten erfindungsgemäßen Verfahrensparameter einzustellen. Da dies aber mit der hierin enthaltenen Offenbarung der Erfindung für alle industriell relevanten nicht verholzenden Pflanzenarten ermöglicht wird, können die erfindungsgemäß verwendeten Partikel vorzugsweise aus den industriell relevanten nicht verholzenden Pflanzenarten ausgewählt werden, also z.B. aus Getreidepartikel, Hülsenfrüchtenpartikel, Ölpflanzenpartikel, Faserpflanzenpartikel, Gräserpartikel, insbesondere Miscanthuspartikel, Topinamburpartikel, Schilfpartikel, Strauchschnittpartikel, Blätterpartikel von Bäumen und Sträuchern, Rindenpartikel, Elefantengraspartikel, Heupartikel, Maisspindelpartikel oder Mischungen davon.

Gemäß einer bevorzugten Ausführungsform werden die Partikel während der Behandlung mit dem Extraktionsmittel durchmischt.

Wie schon oben erwähnt, besteht eine bevorzugte Ausführungsform des erfindungsgemäßen Verfahrens darin, dass die Partikel nach der Behandlung mit dem Extraktionsmittel abgepresst werden, um das Extraktionsmittel zu entfernen. Vorzugsweise können die Partikel nach der (Extraktions-)Behandlung mit dem Extraktionsmittel ein- oder mehrmals mit einem Extraktionsmittel, noch mehr bevorzugt mit einem organisch-wässrigen Lösungsmittel mit einer ähnlichen oder gleichen Konzentration wie die des Extraktionsmittels, gereinigt werden. Das bei der Extraktion und/oder Wäsche verwendete Extraktionsmittel kann durch mehrmalige Waschung mit Wasser oder Trocknung aus den Partikeln entfernt werden, wobei eine Trocknung besonders bevorzugt ist. Sowohl Extraktionsmittel als auch Waschwässer werden vorzugsweise im Anschluss an das erfindungsgemäße Verfahren für eine Wiederverwendung regeneriert. Dabei können aus dem Extraktionsmittel wie erwähnt die Extraktstoffe, speziell Fettsäuren und Terpene, abgetrennt und als Nebenprodukte verwendet werden.

Mit dem erfindungsgemäßen Verfahren ist es möglich, Partikel so zu präparieren, dass der Gehalt an Fettsäuren in den Partikeln so reduziert wird, dass das herzustellende Produkt aus den Rohstoffen aus nicht verholzender Biomasse keine organoleptisch nachteiligen Eigenschaften aufweist. Vorzugsweise wird erfindungsgemäß durch Extraktion der Partikel mit dem Extraktionsmittel der Gehalt an Fettsäuren in den Partikeln um mindestens 75 %, vorzugsweise um mindestens 80 %, insbesondere um mindestens 90 %, verringert, gemessen als Hexanal-Gehalt in Gew.-% der Partikel im Ausgangsmaterial im Vergleich zu den extrahierten Partikeln jeweils nach beschleunigter Alterung für 72 h bei 90°C.

Die so erhaltenen Partikel weisen vorzugsweise einen Gehalt an Fettsäuren in den Partikeln von unter 2 mg/kg Trockenmasse, vorzugsweise von unter 1 mg/kg Trockenmasse, insbesondere von unter 0,5 mg/kg Trockenmasse, auf, gemessen als Hexanal-Gehalt als Massenanteil der extrahierten Partikel nach beschleunigter Alterung für 72 h bei 90°C.

Zusätzlich zur Reduktion des Hexanal-Gehaltes ist es mit dem erfindungsgemäßen Verfahren auch möglich, die mechanische Festigkeit der extrahierten Partikel, gemessen als Tensile Index von Probeblättern in Nm/g, um mindestens 10 %, vorzugsweise um mindestens 15 %, insbesondere um mindestens 25 %, zu steigern, wobei sich der Mahlgrad, gemessen in °SR, dabei um weniger als 10 % ändert.

Es hat sich erfindungsgemäß gezeigt, dass neben der Extraktion von Fettsäuren mit dem erfindungsgemäßen Verfahren auch Terpene und Pinene (neben anderen VOCs) extrahiert werden können. Im Rahmen einer bevorzugten Ausführungsform werden die in das Extraktionsmittel extrahierten Fettsäuren, Terpene, Pinene und/oder gegebenenfalls weitere Extraktstoffe einem weiteren Aufreinigungsverfahren zugeführt und können dann als Nebenprodukte der Herstellung in extrahierter und gegebenenfalls weiter aufgereinigter Form zur Verfügung gestellt werden.

Gemäß einer bevorzugten Ausführungsform werden den Partikeln keine Komplexbildner, insbesondere Komplexbildner ausgewählt aus mehrwertigen und polyfunktionellen Carbonsäuren, Aminomethylcarbonsäuren, Aminomethyl-phosphonsäuren und deren Verbindungen, EDTA, DTPA EGTA, EDDS und deren Salzen, Polyphenolen, Tanninen, Aminosäuren, Peptiden, Proteinen, Polycarboxylaten, Phosphaten, Polyphosphaten, Phosphonsäuren, Polyphosphonaten, phosphatierten, phosphonylierten, sulfatierten und sulfonierten Polymeren, im Verlauf des Extraktionsverfahrens, insbesondere im Verlauf des gesamten Herstellungsverfahrens für die aus den Partikeln hergestellten Produkte, zugesetzt. In dieser Ausführungsform stellt das erfindungsgemäße Verfahren eine alleine schon aus ökologischen Gründen äußerst vorteilhafte und praxisrelevante Variante dar.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Insbesondere wird die vorliegende Erfindung anhand der nachfolgenden Beispiele und der Figuren näher erläutert, ohne natürlich darauf beschränkt zu sein. Es zeigen:
Fig. 1 den Hexanal-Gehalt bei 70°C Extraktionstemperatur. Die x-Achse zeigt die Extraktionszeit in h; die y-Achse den Hexanal-Gehalt des extrahierten Holz-Schliffes in mg/kgTM;
Fig. 2 den Hexanal-Gehalt bei 90°C Extraktionstemperatur. Die x-Achse zeigt die Extraktionszeit in h; die y-Achse den Hexanal-Gehalt des extrahierten Holz-Schliffes in mg/kgTM;
Fig. 3 den Hexanal-Gehalt bei 110°C Extraktionstemperatur. Die x-Achse zeigt die Extraktionszeit in h; die y-Achse den Hexanal-Gehalt des extrahierten Holz-Schliffes in mg/kgTM;
Fig. 4 die Hexanal-Gehalt-Reduktion bei 70°C Extraktionstemperatur. Die x-Achse zeigt die Extraktionszeit in h; die y-Achse die Reduktion des Hexanal-Gehaltes in % bezogen auf trockenem Ausgangsstoff;
Fig. 5 die Hexanal-Gehalt-Reduktion bei 90°C Extraktionstemperatur. Die x-Achse zeigt die Extraktionszeit in h; die y-Achse die Reduktion des Hexanal-Gehaltes in % bezogen auf trockenem Ausgangsstoff;
Fig. 6 die Hexanal-Gehalt-Reduktion bei 110°C Extraktionstemperatur. Die x-Achse zeigt die Extraktionszeit in h; die y-Achse die Reduktion des Hexanal-Gehaltes in % bezogen auf trockenem Ausgangsstoff.

### Beispiele:

Ziel des entwickelten Verfahrens in diesem Patent ist eine signifikante Verbesserung der organoleptischen Eigenschaften der Partikel aus nicht verholzender Biomasse sowie gealterter Partikel aus dieser Biomasse, die nach diesem Verfahren hergestellt werden. Der - insbesondere nach Alterung der Partikel aus nicht verholzender Biomasse (bis zu 6 Monate) - auftretende unerwünschte Geruch dieser, und Geschmack der damit in Berührung kommender Lebensmittel, kommt vor allem durch Aldehyde (ganz besonders Hexanal) zustande, die durch eine autokatalytische Oxidation von natürlich in der nicht verholzenden Biomasse vorkommenden Fettsäuren (vor allem der Linolsäure) gebildet werden. Diese autokatalytische Oxidation wird, wie oben erwähnt, industriell - bei der Verarbeitung von Holz-Biomasse - derzeit durch die Komplexierung der in den Holz-Partikeln vorhandenen Metallionen, welche als Katalysator wirken, mittels Zugabe von Komplexbildnern wie beispielsweise Ethylendiamintetraessigsäure (EDTA) unterbunden bzw. stark verlangsamt. Das Verfahren gemäß der vorliegenden Erfindung erreicht eine signifikante Verbesserung der organoleptischen Eigenschaften der Partikel aus nicht verholzender Biomasse ebenfalls ohne Zugabe von Komplexbildern, sondern durch Entfernung potentieller Aldehydquellen, allen voran Fettsäuren.

Da Fettsäuren als Aldehydquelle, und in weiterer Folge Quelle organoleptischer Beeinträchtigungen der Partikel aus nicht verholzender Biomasse, messtechnisch nur mit großem Aufwand zufriedenstellend zu quantifizieren sind, und weil die Anwendung der erfindungsgemäßen Technologie auf Holzpartikel bereits entsprechende Versuche durchgeführt wurden (und sich diese für eine Fachperson als unmittelbar anwendbar auf Partikel aus nicht verholzender Biomasse darstellen) wurde für die Beurteilung des Extraktionserfolges der Versuche gemäß der vorliegenden Erfindung die Anwendung der erfindungsgemäßen Technologie auf Holzpartikel in den folgenden Beispielen gezeigt, und dabei auch insbesondere der Hexanal-Gehalt der Holz-Partikel nach Alterung herangezogen. An dieser Stelle ist anzumerken, dass 0,5 mg/kgTM Hexanal (bezogen auf trockenes Holz) jenen empirisch ermittelten Wert markieren, unter dem organoleptische Beeinträchtigungen erfahrungsgemäß sensorisch nicht mehr wahrnehmbar sind. Dies gilt natürlich auch für Partikel aus nicht verholzender Biomasse. Für Hexanal-Gehalte der Holz-Partikel sowie der Partikel aus nicht verholzender Biomasse > 0,5 mg/kgTM gilt: Je höher der Hexanal-Gehalt, desto höher die organoleptische Beeinträchtigung der Holz-Partikel bzw. der Partikel aus nicht verholzender Biomasse.

Die Bestimmung des Hexanal-Gehaltes kann über eine Headspace-Gaschromatografie (HS-GC) erfolgen, indem ca. 0,2 g lufttrockene Holz-Partikel (90-95 wt% TSG) in ein Headspace-Vial gefüllt werden. In diesen Vials müssen die Holz-Partikel dann verschlossen bei Raumtemperatur (ca. 20 °C) sechs Monate gealtert werden, um die Fettsäuren zu Hexanal zu oxidieren. Da dies sehr viel Zeit in Anspruch nimmt, und damit keine zeitnahe Beurteilung des Extraktionserfolges zulässt, wurde für die vorliegenden Experimente (sofern nicht explizit anders angegeben) die beschleunigte Alterung nach DIN ISO 5630-2 durchgeführt. Die Holz-Partikel wurden in HS-GC-Vials verschlossen, 72 h bei 90 °C gealtert und im Anschluss der Hexanal-Gehalt mittels HS-GC ermittelt. Obwohl diese Norm zur beschleunigten Alterung zurückgezogen wurde, zeigen die durchgeführten Extraktions-Versuche in Tabelle 1, dass die Methode der beschleunigten Alterung vergleichbare Werte liefert bzw. die Hexanal-Werte bei der beschleunigten Alterung im Durchschnitt sogar höher liegen und damit sogar noch Sicherheiten bzgl. des Extraktionserfolges bieten. Wie erwähnt, sind die im vorliegenden Beispielteil angegebenen Versuche und Versuchsergebnisse für die Holzpartikel aufgrund der Analogie der Ausgangsmaterialien (Holz-partikel bzw. Partikel aus nicht verholzender Biomasse) im Wesentlichen dieselben (abhängig von der Vergleichbarkeit der Partikel hinsichtlich der organoleptischen Verbindungen, die erfindungsgemäß extrahiert werden; dies gilt aber auch für spezifische Verbindungen aus Partikel aus nicht verholzender Biomasse, wie Terpene und Pinene, die analog zum in den folgenden Beispielen analysierten Hexanal (z.B. aus Linolsäure).

**Tabelle 1**

| Analysierte Holz-Partikel | Hexanal-Gehalt beschleunigt gealtert 72 h bei 90 °C in mg/kgTM | Hexanal-Gehalt natürlich gealtert 6 M. bei 20 °C in mg/kgTM |
|---|---|---|
| Ausgangsstoff | 11,37 | 10, 62 |
| Extrahierte Holz-Partikel 1 | 2,14 | 1,41 |
| Extrahierte Holz-Partikel 2 | 2,17 | 1,52 |
| Extrahierte Holz-Partikel 3 | 2,80 | 1,74 |
| Extrahierte Holz-Partikel 4 | 3,32 | 2,57 |
| Extrahierte Holz-Partikel 5 | 3,64 | 2,75 |
| Extrahierte Holz-Partikel 6 | 1,34 | 2,72 |
| Extrahierte Holz-Partikel 7 | 2,35 | 1,69 |
| Extrahierte Holz-Partikel 8 | 2,86 | 2,83 |

Für den Extraktionserfolg aller Experimente gemäß der vorliegenden Erfindung wurde der Hexanal-Gehalt herangezogen, da dieser erfahrungsgemäß den Haupteinflussfaktor der organoleptischen Beeinträchtigung von Holz-Partikeln aber auch von Partikel aus nicht verholzender Biomasse darstellt. Der Extraktstoffgehalt mittels Soxhlet-Extraktion nach der TAPPI-Norm T204 ist hierfür zu ungenau, wie Tabelle 2 zeigt. An dieser Stelle ist anzumerken, dass für die Bestimmung des Extraktstoffgehaltes der Holz-Partikel aller Versuche dieses Patents nicht die TAPPI-Norm T204, sondern die der T204 sehr ähnliche NREL-Methode NREL/TP-510-42619 angewendet wurde und Holz-Schliff statt Holz-Mehl als Ausgangsstoff eingesetzt wurde.

**Tabelle 2**

| Lösungsmittel | Hexanal-Gehalt des Ausgangsstoffes in mg/kgTM | | Hexanal-Gehalt der extrahierten Holz-Partikel in mg/kgTM | | Ermittelter Extrakts toff-Gehalt der extrahierten Holzpartikel in wt% bez. auf den Ausgangsstoff |
|---|---|---|---|---|---|
| | Mittelwert | STABW | Mittelwert | STABW | |
| Ethanol | 14,07 | 1,13 | < 0,20 | - | 3,4 |
| Ethanol | 14,07 | 1,13 | < 0,20 | - | 3,0 |
| Aceton | 14,07 | 1,13 | 0,32 | 0,02 | 3,0 |
| Aceton | 14,07 | 1,13 | 0,27 | 0,01 | 2,6 |

Wie in Tabelle 2 zu erkennen ist, unterscheiden sich die Soxhlet-Extraktionen mit Ethanol signifikant von jenen mit Aceton im Hexanal-Gehalt, jedoch nicht signifikant im Extraktstoff-Gehalt. Dies bedeutet, dass beispielsweise zwei unterschiedlich extrahierte Holz-Partikel unterschiedliche organoleptische Eigenschaften trotz nicht signifikant unterschiedlichem ExtraktstoffGehalt aufweisen können. Der Hexanal-Gehalt der Holz-Partikel nach Alterung ist somit ein wesentlich stärkerer und genauerer Indikator für die organoleptische Beeinträchtigung als der ExtraktstoffGehalt, und wurde daher für den Extraktionserfolg gemäß der vorliegenden Erfindung herangezogen. Zusätzlich wurde der Hexanal-Gehalt des Ausgangsstoffes und die daraus resultierende Reduktion des Hexanal-Gehaltes für alle Experimente angeben, da die Ausgangsstoffe Momentaufnahmen sind und der Hexanal-Gehalt daher mitunter sehr stark schwanken kann.

Nichtsdestotrotz ist die extrahierte Extraktstoffmasse (ermittelt als Eindampfrückstand des Extraktes) ein wichtiger Indikator für den Feststoffmassenverlust der Extraktionen, da er - bis auf einige wenige sehr flüchtige Verbindungen - nahezu die gesamte extraktiv entfernte Feststoffmasse miteinschließt. Somit ist der Eindampfrückstand des Extraktes gemeinsam mit dem Hexanal-Gehalt der extrahierten Holz-Partikel ein wichtiges Maß für die Beurteilung der Selektivität der Extraktionen.

### Versuch: Gegenüberstellung Lösungsmittel anhand von Soxhlet-Extraktionen

Zur Lösungsmittel-Vorauswahl wurden Holz-Schliff-Proben mit drei verschiedenen Lösungsmitteln extrahiert. Es wurden jeweils 3 g lufttrockener Holz-Schliff 24 h mittels Soxhlet-Methode nach der NREL-Prozedur NREL/TP-510-42619 extrahiert. Die Ergebnisse sind in Tabelle 3 dargestellt.

**Tabelle 3**

| Lösungsmittel 1 (24 h) | Lösungsmittel 2 (24 h) | Hexanal-Gehalt des Ausgangsstoffes in mg/kgTM | Hexanal-Gehalt des extrahierten Holz-Schliffes in mg/kgTM | Ermittelter Extrakts toff-Gehalt der extrahierten Holzpartikel in wt% bez. auf den Ausgangsstoff |
|---|---|---|---|---|
| Cyclohexan | - | 11,32 | 2,36 | 1,0 |
| Ethanol | Cyclohexan | 11,32 | < 0,20 | 3,4 |
| Ethanol | - | 11,32 | < 0,20 | 3,1 |
| Ethanol | - | 14,07 | < 0,20 | 3,0 |
| Aceton | - | 14,07 | 0,32 | 3,0 |

In Tabelle 3 ist zu erkennen, dass selbst bei höheren Hexanal-Gehalten des Ausgangsstoffes Ethanol am besten extrahiert, gefolgt von Aceton. Cyclohexan extrahiert mit Abstand am schlechtesten, was bedeutet, dass für die Extraktion von Fettsäuren gänzlich unpolare Lösungsmittel ungeeignet sind. Gemäß Reichardt und Welton (Reichardt und Welton, Solvents and Solvent Effects in Organic Chemistry4 (2011), Weinheim: Wiley-VCH Verlag GmbH & Co. KGaA, pp 550-552) ist die empirisch bestimmte Polarität von Cyclohexan 0 (sehr unpolar) verglichen mit 0,355 von Aceton und 0,654 von Ethanol. Nichtsdestotrotz konnte auch die Extraktion mit Cyclohexan den Hexanal-Gehalt um 79 % reduzieren.

### Versuch 1: Extraktion von trockenem Holz-Schliff

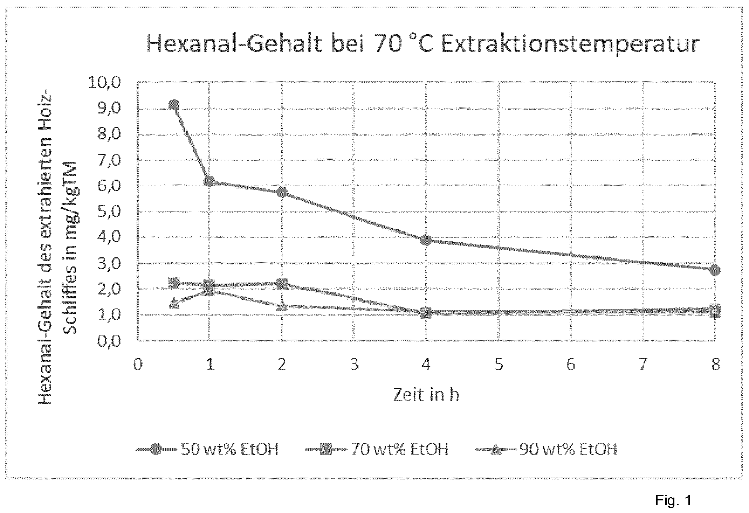

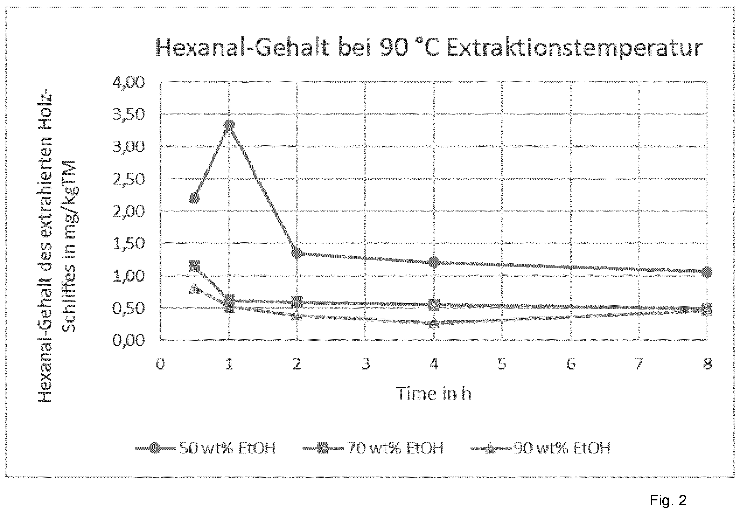

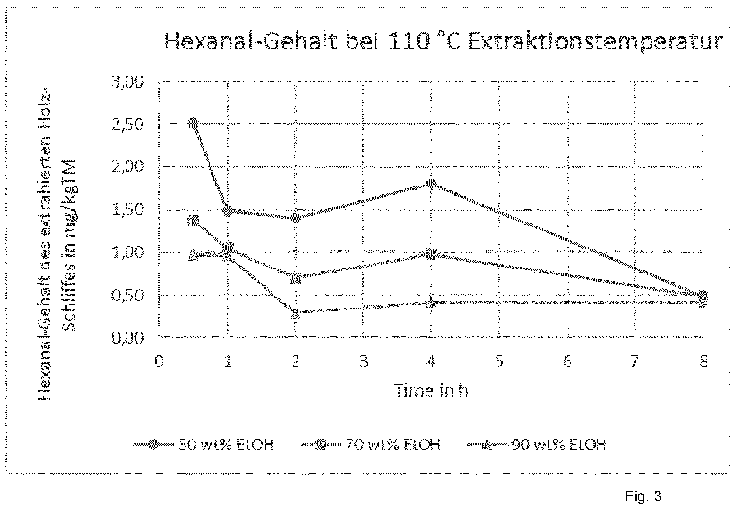

Anhand der Extraktion von lufttrockenem Holz-Schliff mit Ethanol (EtOH) wurde der Einfluss der Parameter Lösungsmittelkonzentration, Temperatur und Extraktionsdauer untersucht. Dazu wurden ca. 2 g lufttrockener Holz-Schliff in einem Ethanol-Wasser-Gemisch mit einem Feststoff:Extraktionsmittel-Verhältnis von 1:10 w/w und Ethanol-Konzentrationen von 50, 70 und 90 wt% bei Temperaturen von 70, 90 und 110 °C jeweils 0,5, 1, 2, 4 und 8 h lang in kleinen Autoklaven extrahiert. Nach der Extraktion wurde der Holz-Schliff abgepresst, mit Ethanol gewaschen, wieder abgepresst und nochmals mit vollentsalztem Wasser gewaschen bevor er getrocknet, gealtert und analysiert wurde. In den Figuren 1 bis 3 sind die durch die Extraktion erreichten Hexanal-Gehalte bei den unterschiedlichen Extraktionstemperaturen und Lösungsmittelkonzentrationen über der Extraktionszeit aufgetragen.

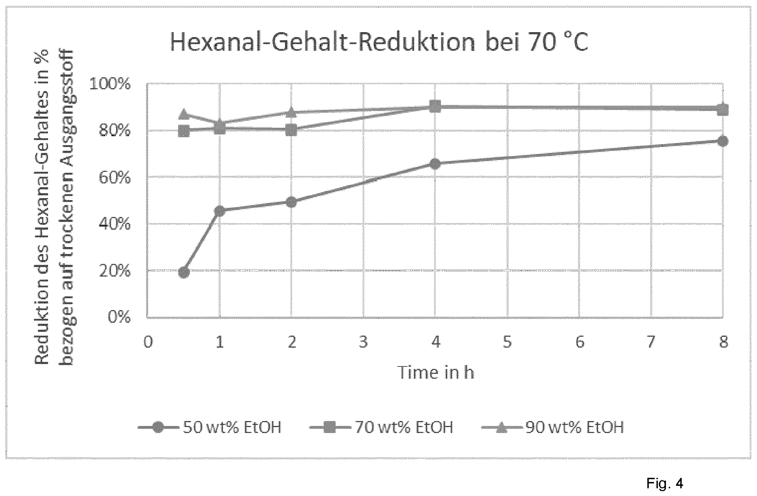

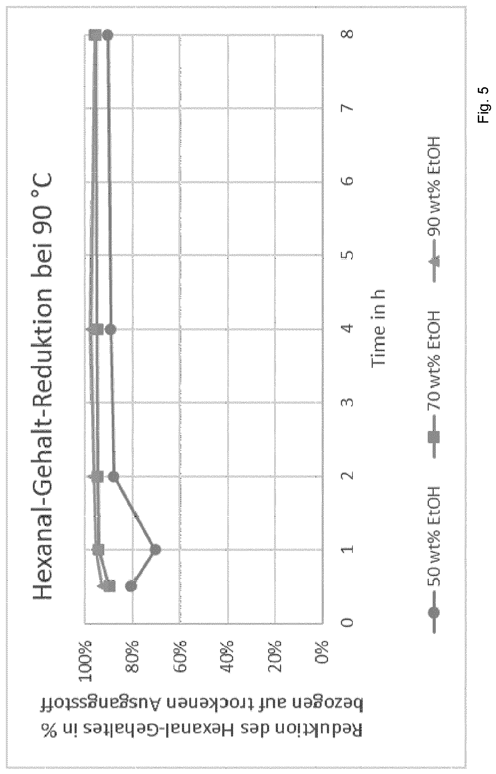

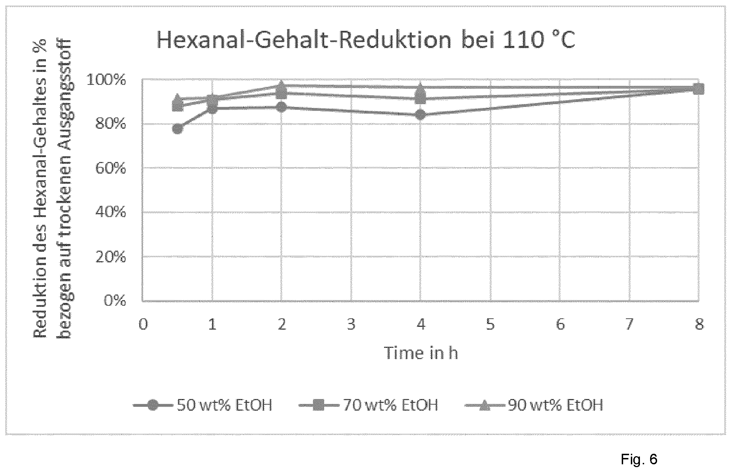

Die Figuren 1 bis 3 zeigen, dass der Extraktionserfolg bei 70 oder 90 wt% Ethanol deutlich gegenüber jenem bei 50 wt% verbessert ist - insbesondere bei niedrigeren Temperaturen. Ethanol-Konzentrationen von 70 oder 90 wt% Ethanol senken den Hexanal-Gehalt auf ein vergleichbares Niveau. Bei den Extraktionstemperaturen zeichnet sich ab, dass 90 und 110°C den Hexanal-Gehalt in etwa gleich senken, während er bei 70°C nicht so stark reduziert wird. Bei 90 wt% Ethanol kann der Hexanal-Gehalt ab 90°C sogar unter die 0,5 mg/kgTM-Marke gesenkt werden, wodurch der unter diesen Bedingungen extrahierte Holz-Schliff erfahrungsgemäß keine organoleptischen Beeinträchtigungen mehr aufweist. Anhand der unterschiedlichen Extraktionszeiten ist erkennbar, dass der Hexanal-Gehalt am stärksten zu Beginn der Extraktion, und vor allem in den ersten 4 h sinkt. Dies ist auch in den Figuren 4 bis 6 ersichtlich. Diese Figuren spiegeln die Extraktionserfolge dargestellt in den Figuren 1 bis 3 wider, da für alle Versuche dieser Versuchsreihe der gleiche Batch Ausgangsstoff verwendet wurde. Es ist gut ersichtlich, dass im schlechtesten Fall (0,5 h mit 50 wt% Ethanol bei 70 wt% der Hexanal-Gehalt lediglich um ca. 20 % reduziert werden konnte, während dieser bei 90 wt% Ethanol ab 90 °C über 95 % reduziert wurde.

In Tabelle 4 ist zu sehen, dass trotz der bei dieser Versuchsserie erzielten hohen Hexanal-Gehalt-Reduktionen, die extrahierte Feststoffmasse max. 7 wt% (bez. auf den Ausgangsstoff) beträgt - meist jedoch deutlich darunter. Dies bedeutet bei einem ermittelten Extraktstoffgehalt des Ausgangsstoffes von ca. 3 wt%, dass weder Hemicellulosen noch Lignin in nennenswertem Umfang extrahiert werden.

**Tabelle 4**

| Extrahierte Feststoffmasse in wt% (bez. auf den Ausgangsstoff) | | | | | | |
|---|---|---|---|---|---|---|
| Extraktionsdauer in h | | 0,5 | 1,0 | 2,0 | 4,0 | 8,0 |
| 70 °C | 50 wt% EtOH | 4,3 | 4,6 | 4,4 | 4,0 | 3,6 |
| | 70 wt% EtOH | 4,9 | 5,1 | 4,8 | 5,6 | 4,2 |
| | 90 wt% EtOH | 4,5 | 5,5 | 5,7 | 5,3 | 6,1 |
| 90 °C | 50 wt% EtOH | 3,7 | 3,5 | 4,0 | 4,7 | 5,1 |
| | 70 wt% EtOH | 4,0 | 4,4 | 4,8 | 4,8 | 5,4 |
| | 90 wt% EtOH | 5,5 | 5,6 | 5,9 | 5,8 | 5,6 |
| 110 °C | 50 wt% EtOH | 4,7 | 4,1 | 5,3 | 6,2 | 6, 3 |
| | 70 wt% EtOH | 5,2 | 6,6 | 5,7 | 5,8 | 7,2 |
| | 90 wt% EtOH | 5,8 | 5,7 | 6,8 | 6,5 | 6,4 |

### Versuch 2: Extraktion von feuchtem Holz-Schliff mit Ethanol bei verschiedenen Bedingungen

Die Extraktion von feuchtem Holz-Schliff repräsentiert insbesondere bei der Kartonherstellung reale Bedingungen viel besser als die Extraktion von trockenem Holz-Schliff, wie Versuch 1. Außerdem wurde für diese Versuche wesentlich mehr Probenmasse genommen (Faktor 225) als für Versuch 1, um ein aussagekräftigeres Ergebnis zu bekommen. Es wurden ca. 450 gTM mechanisch entwässerter Holz-Schliff (ca. 25 wt% TSG) in einem Ethanol-Wasser-Gemisch mit einem Feststoff:Lösungsmittel-Verhältnis von 1:10 w/w und Ethanol-Konzentrationen von 60 wt% bei Temperaturen von 70 und 90°C 2 und 4 h lang in einem Autoklaven extrahiert. Nach der Extraktion wurde der Holz-Schliff abgepresst, mit Ethanol gewaschen, wieder abgepresst und nochmals mit vollentsalztem Wasser gewaschen bevor er getrocknet, gealtert und analysiert wurde. Tabelle 5 zeigt die Ergebnisse dieser Extraktionen.

**Tabelle 5**

| EtOH- Konzentration in wt% | Extraktionsbedingungen | | Hexanal-Gehalt des Ausgangsstoffes in mg/kgTM | | Hexanal-Gehalt des extrahierten Holz-Stoffes in mg/kgTM | | Reduktion des Hexanal-Gehaltes bez. auf den Ausgangsstoff |
|---|---|---|---|---|---|---|---|
| | Temperatur in °C | Zeit in h | Mittelwert | STABW | Mittelwert | STABW | |
| 60 | 70 | 2 | 11,37 | 0,18 | 3,06 | 1,18 | 73% |
| 60 | 70 | 4 | 11,37 | 0,18 | 2,15 | 1,00 | 81% |
| 60 | 90 | 2 | 11,37 | 0,18 | 2,60 | 0,88 | 77% |
| 60 | 90 | 4 | 11,37 | 0,18 | 2,49 | 1,50 | 78% |

Die Versuche zeigen, dass - verglichen mit der Extraktion von geringerer und vor allem lufttrockener Holz-Stoff-Masse - die Versuche mit mechanisch entwässertem Holz-Stoff und mehr Probenmasse höhere Hexanal-Gehalte im extrahierten Holz-Stoff aufweisen. Nichtsdestotrotz wurden bei jedem Setting über 73% Reduktion des Hexanal-Gehaltes erreicht.

### Versuch 3: Extraktion von feuchtem Holz-Schliff mit drei verschiedenen organischen Lösungsmitteln

Versuch 3 wurde durchgeführt, um drei verschiedene technisch relevante Lösungsmittel unter realen Extraktionsbedingungen zu testen. Es wurden ca. 450 gTM mechanisch entwässerter Holz-Schliff (ca. 25 wt% TSG) in einem Lösungsmittel-Wasser-Gemisch mit einem Feststoff:Extraktionsmittel-Verhältnis von 1:10 w/w und einer Lösungsmittel-Konzentration von 70 wt% bei einer Temperatur von 70 °C 4 h lang in einem Autoklaven extrahiert. Nach der Extraktion wurde der Holz-Schliff abgepresst, mit Extraktionsmittel gewaschen, wieder abgepresst und nochmals mit vollentsalztem Wasser gewaschen bevor er getrocknet, gealtert und analysiert wurde. Tabelle 6 zeigt die Ergebnisse dieser Extraktionen.

**Tabelle 6**

| Lösungsmittel | Hexanal-Gehalt des Ausgangsstoffes in mg/kgTM | | Hexanal-Gehalt des extrahierten Holz-Stoffes in mg/kgTM | | Reduktion des Hexanal-Gehaltes bez. auf den Ausgangsstoff | Eindampfrückstand des Extrakts in wt% bezogen auf die Ausgangsstoff-Trockenmasse | | Reduktion des A-bietinsäure -Gehaltes bez. auf den Ausgangs stoff |
|---|---|---|---|---|---|---|---|---|
| | Mittelwert | STABW | Mittelwert | STABW | | Ausgangs stoff | Extrahierter Holz-Schlif f | |
| Ethanol 96 vol% unvergällt | 14,07 | 1,13 | 4,92 | 0,40 | 65 % | 3,6 | 2,3 | 41 % |
| Ethanol 96 vol% unvollständig vergällt mit Butanon | 14,07 | 1,13 | 2,77 | 0,04 | 80 % | 3,6 | 2,4 | 48 % |
| Aceton | 14,07 | 1,13 | 3,43 | 0,04 | 76 % | 3,6 | 2,2 | 55 % |

Wie in Tabelle 6 zu sehen ist, extrahiert Aceton die ungesättigten Fettsäuren, die für die Hexanal-Bildung verantwortlich sind, signifikant besser als unvergällter Ethanol. Die besten Extraktionsergebnisse konnten allerdings mit Ethanol erzielt werden, der mit Butanon unvollständig vergällt wurde. Der hierbei mit 70 wt%, 70°C und 4 h Extraktionszeit erreichte Hexanal-Gehalt von 2,77 mg/kgTM liegt zwar noch deutlich über der 0,5 mg/kgTM-Grenze, entspricht aber einer Reduktion von 80 %. Bei allen Extraktionen beträgt der Eindampfrückstand des Extraktes nur zwischen 2,2 und 2,4 wt% bezogen auf die Ausgangsstoff-Trockenmasse, was bei einem ermittelten Extraktstoff-Anteil von 3,6 wt% bedeutet, dass die Holz-Hauptbestandteile Cellulose, Hemicellulosen und Lignin de facto nicht angegriffen wurden und die Extraktionen somit sehr selektiv waren. Der Abietinsäure-Gehalt der Extraktionen dieses Versuches wurde um 41 - 55 %, bezogen auf den Ausgangsstoff, reduziert. Da Abietinsäure hier als Leit-Substanz für den Gehalt an Harzsäuren gewählt wurde, ist eine Reduktion des Gehaltes um rund 50 % ein Indiz für die deutliche Reduktion an Harz durch das Verfahren dieses Patents.

### Versuch 4: Extraktion von feuchtem Holz-Schliff mit Aceton bei verschiedenen Feststoff-Extraktionsmittel-Verhältnissen

Der Einfluss verschiedener Feststoff-Extraktionsmittel-Verhältnisse wurde in diesem Versuch untersucht. Es wurden ca. 200 - 450 gTM (je nach Feststoff:Extraktionsmittel-Verhältnis) mechanisch entwässerter Holz-Schliff (ca. 25 wt% TSG) in einem Lösungsmittel-Wasser-Gemisch bestehend aus 70 wt% Aceton und 30 wt% vollentsalztem Wasser mit Feststoff:Extraktionsmittel-Verhältnissen von 1:10, 1:15 und 1:25 w/w bei einer Temperatur von 50 °C 1, 2 und 4 h lang in einem Autoklaven extrahiert. Nach der Extraktion wurde der Holz-Schliff abgepresst, mit Extraktionsmittel gewaschen, wieder abgepresst und nochmals mit vollentsalztem Wasser gewaschen bevor er getrocknet, gealtert und analysiert wurde. Die Ergebnisse dieser Extraktionen sind in Tabelle 7 aufgelistet.

**Tabelle 7**

| Feststoff : Extraktionsmittel -Verhältnis w/w | Extrak tion s-zeit in h | Hexanal-Gehalt des Ausgangsstoffes in mg/kgTM | | Hexanal-Gehalt des extrahierten Holz-Stoffes in mg/kgTM | | Reduktion des Hexanal-Gehaltes bez. auf den Ausgangsstoff | Eindampf rückstand des Extrakt s in wt% bezogen auf die Ausgangs stoff | Reduktion des Abietinsäure -Gehaltes bez. auf den Ausgangs stoff |
|---|---|---|---|---|---|---|---|---|
| | | Mittelwert | STAB W | Mittelwert | STAB W | | -Trockenmasse | |
| 1:10 | 4 | 14,07 | 1,13 | 5,83 | 0,18 | 59% | 2,0 | 31 % |
| 1:15 | 4 | 14,07 | 1,13 | 2,76 | 0,15 | 80% | 2,5 | 54 % |
| 1:15 | 2 | 7,24 | 0,03 | 1,19 | 0,72 | 84% | - | 38 % |
| 1:25 | 2 | 7,24 | 0,03 | 0,94 | 0,23 | 87% | - | 52 % |
| 1:10 | 1 | 2,44 | 0,11 | 0,40 | 0,04 | 84% | 2,2 | - |
| 1:10 | 2 | 2,44 | 0,11 | 0,40 | 0,05 | 84% | 1,5 | - |
| 1:15 | 2 | 2,44 | 0,11 | 0,39 | 0,01 | 84% | 2,5 | - |
| 1:25 | 2 | 2,44 | 0,11 | 0,33 | 0,01 | 86% | 2,8 | - |

Wie Tabelle 7 zeigt, wird der Hexanal-Gehalt bei allen Extraktionen (mit Ausnahme des Feststoff:Extraktionsmittel-Verhältnisses von 1:10 (w/w) bei einem Ausgangsstoff-Hexanal-Gehalt von 14,07 mg/kgTM) um über 80 % reduziert. Bei Extraktionsmittel-Feststoff-Verhältnissen über 10:1 (w/w) ist die Reduktion des Hexanal-Gehaltes bei gleichen Extraktionsbedingungen trotz unterschiedlichen Ausgangsstoff-Hexanal-Gehalten vergleichbar hoch und stets weit über 70 %. Der Eindampfrückstand des Extraktes beträgt dabei weniger als 3 %, was bei ermittelten Extraktstoff-Gehalten des Ausgangsstoffes von 3,4 - 3,7 wt% ein Beweis für den quantitativen Erhalt der Lignocellulose-Bestandteile bei diesem Verfahren ist. Auch dieser Versuch hat durch die Reduktion des Abietinsäure-Gehaltes um 31 - 54 %, bezogen auf den Ausgangsstoff, gezeigt, dass das Verfahren dieses Patents Harz signifikant reduzieren kann.

### Versuch 5: Veränderung der mechanischen Eigenschaften durch die extraktive Behandlung von Holz-Schliff gemäß der vorliegenden Erfindung

Dieser Versuch dient dazu, die Auswirkungen der extraktiven Behandlung auf die mechanischen Eigenschaften der extrahierten Holzpartikel zu untersuchen. Dazu wurden ca. 300 - 450 gTM (je nach Feststoff:Extraktionsmittel-Verhältnis) mechanisch entwässerter Holz-Schliff (ca. 25 wt% TSG) in einem Extraktionsmittel-Wasser-Gemisch mit Feststoff:Extraktionsmittel-Verhältnissen von 1:10 und 1:15 w/w und einer Lösungsmittel-Konzentration von 60 und 70 wt% bei Temperaturen von 50 °C, 70 °C und 90 °C extrahiert. Als Lösungsmittel kamen Ethanol 96 vol% unvergällt (EtOH pur), Ethanol 96 vol% unvollständig vergällt mit Butanon (EtOH verg.) und Aceton zum Einsatz. Nach der Extraktion wurde der Holz-Schliff abgepresst, mit Extraktionsmittel gewaschen, wieder abgepresst und nochmals mit vollentsalztem Wasser gewaschen bevor daraus Probenblätter geformt wurden, anhand derer die mechanischen Eigenschaften untersucht wurden. Der Massenverlust ergibt sich aus dem Eindampfrückstand des Extraktes und ist auf Ausgangsstoff-Trockenmasse bezogen. In Tabelle 8 sind die Ergebnisse aufgelistet.

**Tabelle 8**

| Extraktionsbedingungen | | | | | Durchschnittlicher Anstieg der mechanischen Eigenschaften | | | Durchschnittlicher Massenverlust durch die Extraktion |
|---|---|---|---|---|---|---|---|---|
| Lösungsmittel | Konz. | Lsg.-mittel-Verh. | Temp. | Zeit | Steifigkeitsindex gem. in Nm⁷/kg³ | Tensile index gem. in Nm/g | Mahlgrad gem. in °SR | |
| EtOH pur | 60 wt% | 1:10 | 70 °C | 2 h | 3 % | 25 % | 3 % | 2 % |
| | | | 90 °C | 4 h | | | | |
| EtOH pur | 70 wt% | 1:10 | 70 °C | 2 h | 3 % | 41 % | 0 % | 2 % |
| | | | | 4 h | | | | |
| | | | | 8 h | | | | |
| EtOH pur | 70 wt% | 1:10 | 50 °C | | 4 % | 27 % | 6 % | 2 % |
| EtOH verg. | | 1:15 | 70 °C | 4 h | | | | |
| Aceton | | | 90 °C | | | | | |

Wie in Tabelle 8 zu sehen ist, verändert sich der Mahlgrad und somit die Entwässerung des Holz-Schliffes durch die Extraktion kaum, was im Hinblick auf eine etwaige Weiterverarbeitung (beispielsweise zu Karton) den Vorteil mit sich bringt, dass bestehende Produktionsanlagen nicht umgerüstet oder umgestellt werden müssen. Der Steifigkeitsindex verändert sich durch die Extraktion ebenfalls nur wenig, wohingegen der Tensile index als Maß für die Bruchkraft reproduzierbar stark ansteigt. Verglichen mit dieser hohen Steigerung im Mittel zwischen 25 und 41 %, ist der Massenverlust durch den Eindampfrückstand des Extraktes mit rund 2 % sehr gering. Das bedeutet, dass die Holzpartikel durch die Extraktion bei geringem Massenverlust überproportional stark an Festigkeit gewinnen, was insbesondere für den Lightweighting-Trend im Verpackungssektor von großer Bedeutung ist.

### Legende:

TM = Trockenmasse
TSG = Trockensubstanzgehalt

### Bevorzugte Ausführungsformen:

In Anbetracht der obigen Beschreibung der vorliegenden Erfindung werden hierin die nachfolgenden bevorzugten Ausführungsformen der Erfindung offenbart:
1. Verfahren zur Herstellung von Produkten auf Basis von nicht verholzender Biomasse als Rohstoff, dadurch gekennzeichnet, dass Cellulose, Hemicellulosen und Lignin enthaltende, nicht verholzende Biomasse in Form von Partikeln einer Extraktionsbehandlung mit einem Extraktionsmittel unterzogen wird, das ein oder mehrere organische Lösungsmittel oder ein organisch-wässriges Gemisch des oder der Lösungsmittel mit Wasser umfasst, wobei der Gehalt an Fettsäuren in den Partikeln durch die Extraktionsbehandlung der Partikel mit dem Extraktionsmittel um mindestens 70 % verringert wird, gemessen als Hexanal-Gehalt in Gew.-% nach beschleunigter Alterung für 72 h bei 90°C, jedoch der Gehalt an Cellulose, Hemicellulosen und Lignin bei dieser Extraktionsbehandlung im Wesentlichen erhalten wird.
2. Verfahren nach Ausführungsform 1, dadurch gekennzeichnet, dass die Partikel in einer Größe von unter 5 cm vorliegen, wobei die Partikelgröße vorzugsweise durch eine Siebung mittels Quadratmaschensieb ermittelt wird, insbesondere mittels Quadratmaschensieb mit einer Maschenweite von 5 cm oder weniger.
3. Verfahren nach Ausführungsform 1 oder 2, dadurch gekennzeichnet, dass die Partikel in Form von Fasern, Spänen, Strands, Hackschnitzel oder Mischungen davon vorliegen.
4. Verfahren nach einer oder mehreren der Ausführungsformen 1 bis 3, dadurch gekennzeichnet, dass die Partikel durch mechanischen und/oder thermischen und/oder chemischen Aufschluss aufgefaserte Biomasse sind.
5. Verfahren nach einer oder mehreren der Ausführungsformen 1 bis 4, dadurch gekennzeichnet, dass die Partikel Biomasse-Fasern mit mittleren Faserlängen zwischen 0,5 und 2 mm und mittleren Faserdurchmessern zwischen 10 und 50 µm sind, wobei sich die mittlere Faserlänge sowie der mittlere Faserdurchmesser auf das Längen-Mittel, bestimmt mittels optischer Messung der suspendierten Fasern, beziehen.
6. Verfahren nach einer oder mehreren der Ausführungsformen 1 bis 5, dadurch gekennzeichnet, dass der Lösungsmittelanteil des organisch-wässrigen Lösungsmittel-Gemisches im Extraktionsmittel, bestimmt als Konzentration der flüssigen Phase des Extraktes, aus 0 - 95 Gew.-% Ethanol, vorzugsweise 50 - 90 Gew.-% Ethanol, 0 - 99 Gew.-% Aceton, vorzugsweise 30 - 90 Gew.-% Aceton, 0 - 70 Gew.-% n-Propanol, 0-85 Gew.-% Iso-Propanol und/oder 0 - 99 Gew.-% Methanol besteht.
7. Verfahren nach einer oder mehreren der Ausführungsformen 1 bis 6, dadurch gekennzeichnet, dass das Verhältnis von Extraktionsmittel zu Feststoff-Trockensubstanz 5:1 - 25:1 (w/w), vorzugsweise 8:1 - 17:1 (w/w) beträgt.
8. Verfahren nach einer oder mehreren der Ausführungsformen 1 bis 7, dadurch gekennzeichnet, dass die Extraktionsbehandlung bei einer Extraktions-Temperatur von 20 - 150 °C, vorzugsweise 40 - 120 °C, insbesondere 50 - 110 °C, erfolgt.
9. Verfahren nach einer oder mehreren der Ausführungsformen 1 bis 8, dadurch gekennzeichnet, dass die Extraktionsbehandlung bei einem absoluten Extraktionsdruck von 1 - 5 bar, vorzugsweise 1 - 1,49 bar, erfolgt.
10. Verfahren nach einer oder mehreren der Ausführungsformen 1 bis 9, dadurch gekennzeichnet, dass die Extraktionsbehandlung während einer Extraktionszeit von 10 min - 8 h, vorzugsweise 30 min - 7 h, insbesondere 1 - 5 h, erfolgt.
11. Verfahren nach einer oder mehreren der Ausführungsformen 1 bis 10, dadurch gekennzeichnet, dass das Verfahren zur Herstellung von Karton, Papier, insbesondere Faserplatten, Spanplatten, Dämmstoffe, Gebrauchsgegenständen, Medizinprodukten, Lebensmittelzusatzstoffe, pharmazeutische Zusatzstoffe, wie z.B. Arzneiträgerstoffe, insbesondere zur Herstellung von Karton verwendet wird.
12. Verfahren nach einer oder mehreren der Ausführungsformen 1 bis 11, dadurch gekennzeichnet, dass die Extraktionsbehandlung ausgewählt ist aus:
   - Behandlung mit Ethanol in einer Konzentration von zumindest 65 Gew.-% bei zumindest 65°C für einen Zeitraum von zumindest 3 h;
   - Behandlung mit Ethanol in einer Konzentration von zumindest 65 Gew.-% bei zumindest 85°C für einen Zeitraum von zumindest 30 min;
   - Behandlung mit Ethanol in einer Konzentration von zumindest 70 Gew.-% bei zumindest 105°C für einen Zeitraum von zumindest 30 min; oder
   - Behandlung mit Ethanol in einer Konzentration von zumindest 45 Gew.-% bei zumindest 105°C für einen Zeitraum von zumindest 5 h.
   - Behandlung mit Aceton in einer Konzentration von zumindest 50 Gew.-% bei zumindest 40 °C für einen Zeitraum von zumindest 30 min.
13. Verfahren nach einer oder mehreren der Ausführungsformen 1 bis 12, dadurch gekennzeichnet, dass die Behandlung mit dem Extraktionsmittel als Batch, kontinuierliche oder semi-kontinuierliche Extraktion durchgeführt wird, vorzugsweise mit einer Teilverweilzeit von maximal 1h pro Extraktionsschritt.
14. Verfahren nach einer oder mehreren der Ausführungsformen 1 bis 13, dadurch gekennzeichnet, dass bei der Extraktionsbehandlung der Gehalt an Cellulose, Hemicellulosen und Lignin um weniger als 10 %, vorzugsweise um weniger als 5 %, insbesondere um weniger als 4 %, verringert wird, wobei diese Verringerung vorzugsweise als extrahierte Feststoffmasse, bezogen auf den Ausgangsstoff, die Partikel, ermittelt wird.
15. Verfahren nach einer oder mehreren der Ausführungsformen 1 bis 14, dadurch gekennzeichnet, dass die Partikel ausgewählt sind aus Getreidepartikel, Hülsenfrüchtenpartikel, Ölpflanzenpartikel, Faserpflanzenpartikel, Gräserpartikel, insbesondere Miscanthuspartikel, Topinamburpartikel, Schilfpartikel, Strauchschnittpartikel, Blätterpartikel von Bäumen und Sträuchern, Rindenpartikel, Elefantengraspartikel, Heupartikel, Maisspindelpartikel oder Mischungen davon.
16. Verfahren nach einer oder mehreren der Ausführungsformen 1 bis 15, dadurch gekennzeichnet, dass die Partikel während der Behandlung mit dem Extraktionsmittel durchmischt werden.
17. Verfahren nach einer oder mehreren der Ausführungsformen 1 bis 16, dadurch gekennzeichnet, dass die Partikel nach der Behandlung mit dem Extraktionsmittel abgepresst werden, um das Extraktionsmittel zu entfernen.
18. Verfahren nach einer oder mehreren der Ausführungsformen 1 bis 17, dadurch gekennzeichnet, dass die Partikel nach der Behandlung mit dem Extraktionsmittel ein- oder mehrmals mit einem Extraktionsmittel gereinigt, vorzugsweise mit einem organisch-wässrigen Lösungsmittel mit einer ähnlichen oder gleichen Konzentration wie die des Extraktionsmittels, gereinigt werden.
19. Verfahren nach einer oder mehreren der Ausführungsformen 1 bis 18, dadurch gekennzeichnet, dass das Extraktionsmittel durch ein- oder mehrmalige Waschung mit Wasser oder Trocknung, vorzugsweise durch eine Trocknung, aus den Partikeln entfernt wird.
20. Verfahren nach einer oder mehreren der Ausführungsformen 1 bis 19, dadurch gekennzeichnet, dass der Gehalt an Fettsäuren in den Partikeln durch Extraktion der Partikel mit dem Extraktionsmittel um mindestens 75 %, vorzugsweise um mindestens 80 %, insbesondere um mindestens 90 %, verringert wird, gemessen als Hexanal-Gehalt in Gew.-% der Partikel im Ausgangsmaterial im Vergleich zu den extrahierten Partikel nach beschleunigter Alterung für 72 h bei 90°C.
21. Verfahren nach einer oder mehreren der Ausführungsformen 1 bis 20, dadurch gekennzeichnet, dass der Gehalt an Fettsäuren in den Partikeln durch Extraktion der Partikel mit dem Extraktionsmittel auf einen Gehalt von unter 2 mg/kg Trockenmasse, vorzugsweise von unter 1 mg/kg Trockenmasse, insbesondere von unter 0,5 mg/kg Trockenmasse, verringert wird, gemessen als Hexanal-Gehalt als Massenanteil der extrahierten Partikel nach beschleunigter Alterung für 72 h bei 90°C.
22. Verfahren nach einer oder mehreren der Ausführungsformen 1 bis 21, dadurch gekennzeichnet, dass mit der Extraktion neben den Fettsäuren auch Terpene extrahiert werden.
23. Verfahren nach einer oder mehreren der Ausführungsformen 1 bis 22, dadurch gekennzeichnet, dass die mit dem Extraktionsmittel extrahierten Fettsäuren, Terpene, Pinene und/oder gegebenenfalls weitere Extraktstoffe einem weiteren Aufreinigungsverfahren zugeführt werden.
24. Verfahren nach einer oder mehreren der Ausführungsformen 1 bis 23, dadurch gekennzeichnet, dass den Partikel keine Komplexbildner, insbesondere Komplexbildner ausgewählt aus mehrwertigen und polyfunktionellen Carbonsäuren, Aminomethylcarbonsäuren, Aminomethyl-phosphonsäuren und deren Verbindungen, EDTA, DTPA EGTA, EDDS und deren Salzen, Polyphenolen, Tanninen, Aminosäuren, Peptiden, Proteinen, Polycarboxylaten, Phosphaten, Polyphosphaten, Phosphonsäuren, Polyphosphonaten, phosphatierten, phosphonylierten, sulfatierten und sulfonierten Polymeren, im Verlauf des Extraktionsverfahrens, insbesondere im Verlauf des gesamten Herstellungsverfahrens für die aus den Partikeln hergestellten Produkte, zugesetzt werden.
25. Verfahren nach einer oder mehreren der Ausführungsformen 1 bis 24, dadurch gekennzeichnet, dass das Extraktionsmittel sowie gegebenenfalls verwendete Waschflüssigkeiten, insbesondere Wasser, für eine Wiederverwendung regeneriert werden.
26. Verfahren nach einer oder mehreren der Ausführungsformen 1 bis 25, dadurch gekennzeichnet, dass durch die Extraktionsbehandlung zusätzlich zur Reduktion des Hexanal-Gehaltes auch die mechanische Festigkeit der extrahierten Partikel, gemessen als Tensile Index von Probeblättern in Nm/g, um mindestens 10 %, vorzugsweise um mindestens 15 %, insbesondere um mindestens 25 %, erhöht wird, wobei sich der Mahlgrad, gemessen in °SR, dabei um weniger als 10 % ändert.

## Patentansprüche

1. Verfahren zur Herstellung von Produkten auf Basis von nicht verholzender Biomasse als Rohstoff, **dadurch gekennzeichnet, dass** Cellulose, Hemicellulosen und Lignin enthaltende, nicht verholzende Biomasse in Form von Partikeln einer Extraktionsbehandlung mit einem Extraktionsmittel unterzogen wird, das ein oder mehrere organische Lösungsmittel oder ein organisch-wässriges Gemisch des oder der Lösungsmittel mit Wasser umfasst, wobei der Gehalt an Fettsäuren in den Partikeln durch die Extraktionsbehandlung der Partikel mit dem Extraktionsmittel um mindestens 70 % verringert wird, gemessen als Hexanal-Gehalt in Gew.-% nach beschleunigter Alterung für 72 h bei 90°C, jedoch der Gehalt an Cellulose, Hemicellulosen und Lignin bei dieser Extraktionsbehandlung im Wesentlichen erhalten wird.

2. Verfahren nach Anspruch 1, **dadurch gekennzeichnet, dass** die Partikel in einer Größe von unter 5 cm vorliegen, wobei die Partikelgröße vorzugsweise durch eine Siebung mittels Quadratmaschensieb ermittelt wird, wobei die Partikel vorzugsweise in Form von Fasern, Spänen, Strands, Hackschnitzel oder Mischungen davon vorliegen.

3. Verfahren nach Anspruch 1 oder 2, **dadurch gekennzeichnet, dass** die Partikel durch mechanischen und/oder thermischen und/oder chemischen Aufschluss aufgefaserte Biomasse, insbesondere Biomasse-Fasern mit mittleren Faserlängen zwischen 0,5 und 2 mm und mittleren Faserdurchmessern zwischen 10 und 50 µm, sind, wobei sich die mittlere Faserlänge sowie der mittlere Faserdurchmesser auf das Längen-Mittel, bestimmt mittels optischer Messung der suspendierten Fasern, beziehen.

4. Verfahren nach einem oder mehreren der Ansprüche 1 bis 3, **dadurch gekennzeichnet, dass** der Lösungsmittelanteil des organisch-wässrigen Lösungsmittel-Gemisches im Extraktionsmittel, bestimmt als Konzentration der flüssigen Phase des Extraktes, aus 0 - 95 Gew.-% Ethanol, vorzugsweise 50 - 90 Gew.-% Ethanol, 0 - 99 Gew.-% Aceton, vorzugsweise 30 - 90 Gew.-% Aceton, 0 - 70 Gew.-% n-Propanol, 0-85 Gew.-% Iso-Propanol und/oder 0 - 99 Gew.-% Methanol besteht.

5. Verfahren nach einem oder mehreren der Ansprüche 1 bis 4, **dadurch gekennzeichnet, dass** bei der Extraktionsbehandlung der Gehalt an Cellulose, Hemicellulosen und Lignin um weniger als 10 %, vorzugsweise um weniger als 5 %, insbesondere um weniger als 4 %, verringert wird, wobei diese Verringerung vorzugsweise als extrahierte Feststoffmasse, bezogen auf den Ausgangsstoff, die Partikel, ermittelt wird.

6. Verfahren nach einem oder mehreren der Ansprüche 1 bis 5, **dadurch gekennzeichnet, dass** die Partikel ausgewählt sind aus Getreidepartikel, Hülsenfrüchtenpartikel, Ölpflanzenpartikel, Faserpflanzenpartikel, Gräserpartikel, insbesondere Miscanthuspartikel, Topinamburpartikel, Schilfpartikel, Strauchschnittpartikel, Blätterpartikel von Bäumen und Sträuchern, Rindenpartikel, Elefantengraspartikel, Heupartikel, Maisspindelpartikel oder Mischungen davon.

7. Verfahren nach einem oder mehreren der Ansprüche 1 bis 6, **dadurch gekennzeichnet, dass** die Partikel nach der Behandlung mit dem Extraktionsmittel ein- oder mehrmals mit einem Extraktionsmittel gereinigt, vorzugsweise mit einem organisch-wässrigen Lösungsmittel mit einer ähnlichen oder gleichen Konzentration wie die des Extraktionsmittels, gereinigt werden.

8. Verfahren nach einem oder mehreren der Ansprüche 1 bis 7, **dadurch gekennzeichnet, dass** der Gehalt an Fettsäuren in den Partikeln durch Extraktion der Partikel mit dem Extraktionsmittel um mindestens 75 %, vorzugsweise um mindestens 80 %, insbesondere um mindestens 90 %, verringert wird, gemessen als Hexanal-Gehalt in Gew.-% der Partikel im Ausgangsmaterial im Vergleich zu den extrahierten Partikel nach beschleunigter Alterung für 72 h bei 90°C.

9. Verfahren nach einem oder mehreren der Ansprüche 1 bis 8, **dadurch gekennzeichnet, dass** der Gehalt an Fettsäuren in den Partikeln durch Extraktion der Partikel mit dem Extraktionsmittel auf einen Gehalt von unter 2 mg/kg Trockenmasse, vorzugsweise von unter 1 mg/kg Trockenmasse, insbesondere von unter 0,5 mg/kg Trockenmasse, verringert wird, gemessen als Hexanal-Gehalt als Massenanteil der extrahierten Partikel nach beschleunigter Alterung für 72 h bei 90°C.

10. Verfahren nach einem oder mehreren der Ansprüche 1 bis 9, **dadurch gekennzeichnet, dass** mit der Extraktion neben den Fettsäuren auch Terpene extrahiert werden.

11. Verfahren nach einem oder mehreren der Ansprüche 1 bis 10, **dadurch gekennzeichnet, dass** die mit dem Extraktionsmittel extrahierten Fettsäuren, Terpenen, Pinene und/oder gegebenenfalls weitere Extraktstoffe einem weiteren Aufreinigungsverfahren zugeführt werden.

12. Verfahren nach einem oder mehreren der Ansprüche 1 bis 11, **dadurch gekennzeichnet, dass** den Partikel keine Komplexbildner, insbesondere Komplexbildner ausgewählt aus mehrwertigen und polyfunktionellen Carbonsäuren, Aminomethylcarbonsäuren, Aminomethyl-phosphonsäuren und deren Verbindungen, EDTA, DTPA EGTA, EDDS und deren Salzen, Polyphenolen, Tanninen, Aminosäuren, Peptiden, Proteinen, Polycarboxylaten, Phosphaten, Polyphosphaten, Phosphonsäuren, Polyphosphonaten, phosphatierten, phosphonylierten, sulfatierten und sulfonierten Polymeren, im Verlauf des Extraktionsverfahrens, insbesondere im Verlauf des gesamten Herstellungsverfahrens für die aus den Partikeln hergestellten Produkte, zugesetzt werden.

13. Verfahren nach einem oder mehreren der Ansprüche 1 bis 12, **dadurch gekennzeichnet, dass** das Extraktionsmittel sowie gegebenenfalls verwendete Waschflüssigkeiten, insbesondere Wasser, für eine Wiederverwendung regeneriert werden.

14. Verfahren nach einem oder mehreren der Ansprüche 1 bis 13, **dadurch gekennzeichnet, dass** durch die Extraktionsbehandlung zusätzlich zur Reduktion des Hexanal-Gehaltes auch die mechanische Festigkeit der extrahierten Partikel, gemessen als Tensile Index von Probeblättern in Nm/g, um mindestens 10 %, vorzugsweise um mindestens 15 %, insbesondere um mindestens 25 %, erhöht wird, wobei sich der Mahlgrad, gemessen in °SR, dabei um weniger als 10 % ändert.
